Europäisches Patentamt

European Patent Office

Office européen des brevets

(11) Publication number: **0 275 466 B1**

# EUROPEAN PATENT SPECIFICATION

(45) Date of publication of patent specification: **30.09.92** (51) Int. Cl.5: **C25B 11/20**, H01M 8/10

(21) Application number: **87118345.5**

(22) Date of filing: **10.12.87**

The file contains technical information submitted after the application was filed and not included in this specification

(54) **A composite membrane/electrode structure having islands of catalytically active particles.**

(30) Priority: **19.12.86 US 944275**
**19.12.86 US 944277**
**19.12.86 US 944395**
**19.12.86 US 944474**

(43) Date of publication of application:
**27.07.88 Bulletin 88/30**

(45) Publication of the grant of the patent:
**30.09.92 Bulletin 92/40**

(84) Designated Contracting States:
**AT BE CH DE ES FR GB IT LI LU NL SE**

(56) References cited:
**EP-A- 0 026 979**
**GB-A- 2 073 252**
**US-A- 4 457 815**

(73) Proprietor: **THE DOW CHEMICAL COMPANY**
**2030 Dow Center Abbott Road P.O. Box 1967**
**Midland Michigan 48640-1967(US)**

(72) Inventor: **McMichael, James W.**
**426 Southern Oaks Drive**
**Lake Jackson Texas 77566(US)**
Inventor: **Door, Robert D.**
**322 Lamar Street**
**West Columbia Texas 77486(US)**

(74) Representative: **Huber, Bernhard, Dipl.-Chem. et al**
**Patentanwälte H. Weickmann, Dr. K. Fincke F.A. Weickmann, B. Huber Dr. H. Liska, Dr. J. Prechtel Kopernikusstrasse 9 Postfach 86 08 20**
**W-8000 München 86(DE)**

## Description

The term "M & E" stands for Membrane and Electrode and is a structure composed of a substantially planar, sheet-like ion exchange membrane having a plurality of electrically conductive, catalytically active particles present on one or both major planar surfaces of the membrane. The catalytically active particles serve as a particulate electrode when the M & E is used in an electrochemical cell. M & E structures are sometimes called solid polymer electrolyte structures, or SPE structures.

"M & E cells" are electrochemical cells employing an M & E structure. Such cells can be operated as an electrolytic cell for the production of electrochemical products or they may be operated as fuel cells for the production of electrical energy. Electrolytic cells may, for example, be used for the electrolysis of an alkali metal halide such as sodium chloride or for the electrolysis of water.

M & E cells are known in the art and are disclosed in the following U.S. Patent Nos.: 4,293,394; 4,299,674; 4,299,675; 4,319,969 (= EP-A-0 026 979); 4,345,986; 4,386,987; 4,416,932; 4,457,822; 4,469,579; 4,498,942; 4,315,805; 4,364,815; 4,272,353 and 4,394,229.

In M & E cells, frequently, a gaseous product is produced at the catalytically active particles. The gas bubbles off the particles (serving as an electrode) into an electrolyte that contacts the M & E during cell operation. However, the gaseous products that are produced within the pores of the particles, or at the particle/membrane interface, must diffuse out through the pores of the particles before they can bubble into the electrolyte and be removed. Because gases are produced faster than they can escape, they build up within the catalytically active particles or at the particles/membrane interface and cause a decrease in the efficiency of the operation of the M & E cell. Even worse, some gases permeate through the membrane and contaminate the product(s) produced on the other side of the membrane. In chlor-alkali cells, where hydrogen is produced on one side of the membrane and chlorine is produced on the other side of the membrane, hydrogen can permeate through the membrane and contaminate the chlorine; or vice-versa. This contamination can also be hazardous because of the explosive nature of a chlorine/hydrogen mixture.

The prior art has attempted to minimize the problem of gaseous buildup at the M & E by making porous electrodes for M & E's. See, for example, U.S. Patent No. 4,276,146. Some porous M & E electrodes may be formed by including a pore former, such as sodium chloride, in the catalytically active particles during the M & E preparation process. The sodium chloride is later leached out leaving a porous M & E structure. However, such coatings do not solve the gas diffusion problem because a significant reduction in the hydrogen contamination of the chlorine is not realized. Also, the porous catalytically active particles are fragile and do not hold up well to the action of gas evolution which leads to a loss of catalytic-particles resulting in a lower efficiency of the cell.

The present invention provides an M & E structure which is especially designed to minimize the permeation of gaseous products through the membrane and into the opposing side of the cell and to improve the electrical efficiency of the cell.

M & E electrode coatings are made using materials that are rather expensive. The present invention reduces the amount of catalytic material used in the electrode without sacrificing the catalytic activity and efficiency of the coating.

In M & E's of the prior art, a woven, electrically conductive, window-like screen was used to support the M & E. However, a woven screen is not entirely satisfactory because of its uneven surface. When a woven screen is pressed into catalytically active particles or the planar, sheet-like membrane, some portions of the screen penetrate further into the membrane than other portions of the screen. This technique results in uneven contact of the screen with the electrode coating and membrane and in an uneven transfer of electrical energy across the face of the membrane. In addition, some parts of the membrane are more likely to rupture when the screen penetrates the membrane.

Another problem with the use of woven screen concerns the protection of the membrane from being torn or ruptured by mattresses (resilient devices) which may be used to hold a current collector against the catalytically active particles on the surface of the membrane. Accordingly, prior art woven screens therefore do not provide as much protection as is provided by the substantially flat electrically conductive screen of the present invention.

The present invention provides a support structure for M & E's which minimizes most of the problems of using a woven screen type structure.

In particular, the present invention is a composite membrane/electrode structure comprising: a substantially planar ion exchange membrane having a plurality of islands of catalytically active particles bonded to at least one planar surface of the membrane, wherein said islands have a diameter or width of from 6 $\mu$m (microns) to 1 cm and wherein up to about 75 percent of said membrane surface is covered with said catalytically active particles.

The M & E structure of the present invention optionally includes a substantially planar electrically conductive screen having a plurality of openings passing therethrough, said openings occupying up to about 75 percent of the surface area of the screen, said ion exchange membrane being bonded to the screen, thereby leaving portions of the membrane surface exposed through the openings in the screen, and said plurality of catalytically active particles being disposed on the exposed surface portions of the membrane and in electrical and physical contact with the membrane and the screen.

The present invention also provides a method for making an improved composite membrane/electrode structure comprising the steps of forming a coating of catalytically active particles on a removable substrate; contacting a substantially planar ion exchange membrane with a substantially flat and planar screen having a plurality of openings passing therethrough, said openings occupying up to about 75 percent of the surface area of the screen; contacting the screen with the coated substrate; pressing the coated substrate against the screen with sufficient pressure to push the catalytically active particles through the openings in the screen and onto the membrane, thereby forming a plurality of islands of catalytically active particles on the surface of the membrane; removing the screen; and bonding the catalytically active particles to the membrane.

The present invention further resides in a method for making a composite membrane/electrode structure comprising the steps of contacting at least one surface of a substantially planar ion exchange membrane with a substantially flat electrically conductive screen having a plurality of openings occupying up to 75 percent of the surface area of the screen thereby leaving a portion of the membrane exposed through the openings in the screen, coating the portion of the membrane exposed through the openings in the screen with catalytically active particles and bonding the membrane to the particles and the screen.

The invention is more particularly illustrated in the drawings, wherein:

Figure 1 is a side view of one type of substantially flat screen or screen template that is suitable for use in the present invention.

Figure 2 is a side view of another type of substantially flat screen or screen template that is suitable for use in the present invention.

Figure 3 is a top view of a section of the substantially flat screen or screen template that is suitable for use in the present invention.

It has been discovered that M & E structures having islands of catalytically active particles deposited on a membrane, as opposed to M & E's of the prior art that have large substantially continuous coatings of catalytically active particles, surprisingly operate at very high efficiency when used in an electrochemical cell. It is surmised that the increased efficiency results from the open areas of the membrane, i.e. the areas between, the islands of catalytically active particles which are electrically isolated from each other. These open areas provide spaces for the removal of gases generated at the catalytically active surface. In addition, the small size of the islands is such that they provide a short pathway for the escape of gases that form in the interfacial area between the catalytically active particles and the membrane, thus minimizing gas blockage of the membrane. The pattern of the catalytically active particles is designed so that the pathway for the escape of gases from and around the islands of particles is less than the resistance to flow through the membrane. Thus, it is easier for the gases to escape through and around the islands of catalytically active particles than it is to permeate the membrane and escape into the opposing cell compartment.

The size, shape and thickness of the islands of catalytically active particles of the present invention depends upon the type of ion exchange membrane being used. That is, a membrane with a high resistance to gas permeation may allow the use of larger islands of particles, while a membrane having a low resistance to the permeation of gases may require smaller islands of particles. For example, in a chlor-alkali electrolytic cell, a bilayer ion exchange membrane having an overall thickness of about 0.1 mm (4 mils) and comprising a polymer layer having sulfonic ion exchange groups approximately 0.09 mm (3.5 mils) thick and a polymer layer having carboxylic ion exchange groups approximately 0.01 mm (0.5 mil) thick may have islands of catalytically active particles having a dimension of 0.5 cm, preferably less than 0.2 cm. The term "dimension" herein applies to islands of catalytically active particles having a predetermined diameter or width. The diameter or width can have a symmetrical or nonsymmetrical pattern. Preferably, the minimum dimension of the islands is greater than 6, preferably greater than 20 $\mu m$ (microns). The maximum dimension of the islands is less than 1 cm, preferably less than 0.5 cm, more preferably less than 0.2 cm.

Although the islands of catalytically active particles may be coated onto the membrane in a variety of ways, it has been discovered that through the use of a substantially flat, particularly designed screen M & E structures can be produced that are far superior in their design and operational stability than M & E's produced by present prior art methods. The screen used in the present invention produces M & E structures that are far superior in their usefulness to those produced using the electrically conductive woven screens of the prior art because woven screens are not substantially flat, but have a wavy structure typical of woven or knitted materials.

The porosity of the layer of catalytically active particles serving as the M & E structure is also very important in allowing a gas which is formed during cell operation to escape. The M & E's of the prior art have microporous openings which function to a limited extent to provide a pathway for the escape of gases. However, it has been discovered that a "macroporous" coating rather than a continuous coating having "microporous" openings are highly desirable because they provide a large amount of space for the gases to escape. Thus, the screen used in the present invention allows for the preparation of M & E structures which are macroporous (i.e., structures which have a multiplicity of islands of catalytically active particles with relatively large or macroporous openings or spaces between the islands), as opposed to the microporous M & E's of the prior art. The macroporous nature of the M & E structure of the present invention allows the electrochemical cells in which they are used to operate at a higher efficiency.

The screen or screen template used in the present invention is a substantially flat and planar screen that has a plurality of spaced apart openings. The term "screen" as used herein applies interchangeably to a screen which is embedded or bonded to the membrane and a "screen template" which is used as a temporary means to provide the membrane with a plurality of catalytically active particles and which is subsequently removed from the membrane. Preferably, the screen is substantially completely flat on at least one surface. The flatness is particularly desirable because it makes it possible to form a M & E structure that has well-defined, controlled, open areas and, likewise, corresponding areas that can be coated with the catalytically active particles. The screen is preferably a metallic screen although, in the case of a screen template, it can be made of substantially any material capable of being provided with a multiplicity of openings.

In the process of the present invention, the catalytic coating is placed on a removable substrate and later embedded into the membrane through the screen. This leaves a substantial portion of the membrane exposed, i.e. not covered with catalytically active particles. This minimizes the amount of catalytic material that is used for forming the M & E structure and maximizes the area for the escape of gaseous products from the electrode coating because of the presence of a larger amount of open area.

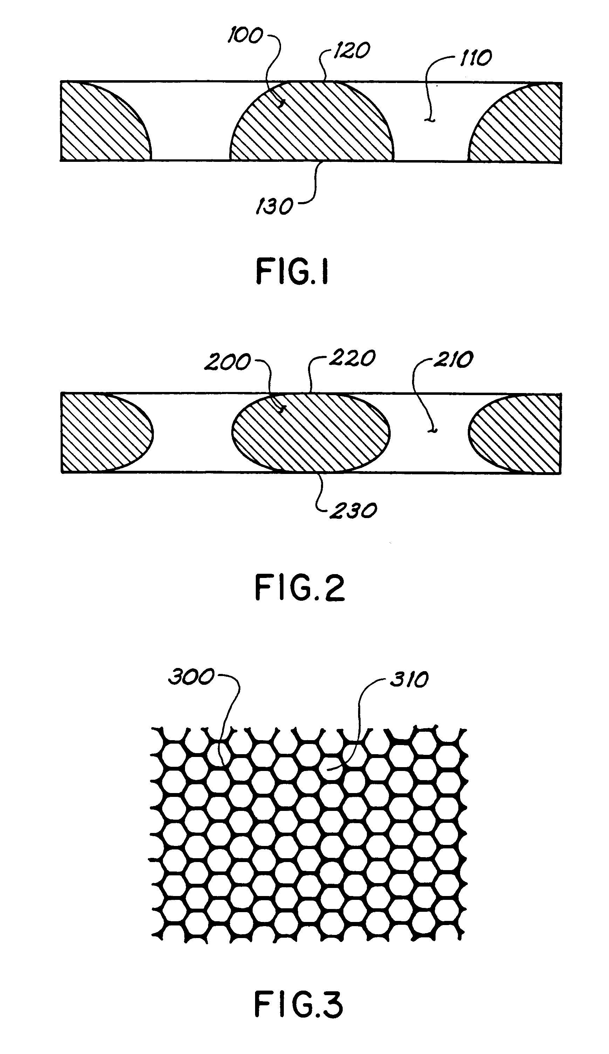

With particular reference to Figure 1, the metal screen 100 has one flat side 130 and one rounded side 120. The rounded side 120 also has a slightly flattened portion. The screen has an opening 110 connecting its two opposite sides. Figure 2 is a side view of another type of screen 200 that is suitable for use in the present invention. There the metal screen has generally rounded sides 220 and 230 which also have slightly flattened portions. The screen has openings 210 connecting its opposite sides. Figure 3 shows a planar top view of the screen 300 and openings 310.

The screen or screen template has up to 75 percent of its surface occupied by openings. Preferably, the openings occupy from 25 to 60 percent and most preferably, from 45 to 55 percent of the screen area. This provides for the preparation of M & E structures wherein there are provided a sufficient number of open areas on the membrane surface for the escape of gases formed at the catalytically active particle coating without the gases permeating through the membrane thereby contaminating the opposing cell compartment.

Optionally, the screen can be constructed so that it has no openings around its peripheral edge, thus providing a nonporous area where a gasket can be placed when the M & E structure is assembled with other components to form an electrochemical cell.

A screen that is particularly suitable for forming the islands of catalytically active particles on the membrane is an electroformed screen having a plurality of openings that are spaced apart and isolated from each other.

Electroforming is the process in which metal is electrochemically deposited on a matrix in a photographically determined pattern. The pattern on the photographic plate is established to provide for a metal matrix having a plurality of openings when the metal is deposited on and then removed from the photographic plate. The so produced screen is photo-perfect and substantially flat. Because the openings are produced by a buildup of metal around each of them, they have a characteristic arch shape. This shape offers smooth passage of the materials being screened printed through the openings and prevents buildup of deposits. Single-sided electroforming produces essentially conical shaped holes; double-sided electroforming produces biconical shaped holes.

The thickness of the screen is not critical to the successful operation of the present invention, but because the preparation process calls for coating the catalytically active particles through the openings in the screen, preferably it is not excessively thick. As a rule, the screen thickness should not exceed the thickness of the layer of the membrane by more than about 25 percent. If the screen is too thick, it will penetrate too far into the membrane and will be more likely to be chemically attacked by the chemicals in the opposing compartment of the cell. More preferably, the thickness of the screen does not exceed the thickness of the layer of the membrane to which the screen is to be bonded.

Electroformed holes are preferred over punched holes and holes formed by other means, because the electroformed holes are smooth so that the screen does not tear the membrane when it is brought into contact with the membrane. Likewise, the electroformed screen is superior to a woven cloth or a woven screen wire mesh because it is substantially flat and does not unevenly penetrate the membrane when contacted therewith.

The shape of the holes in the electrically conductive screen is not critical to the successful operation of the present invention. They may be of almost any shape including circular, oblong, square, rectangular, triangular and the like. Preferably, however, the holes are circular because they result in the formation of circular islands of catalytically active particles which provide the shortest pathway for the escape of gases as compared to any other shape.

The width or diameter of the openings in the screen is preferably less than 1 cm, more preferably less than 0.5 cm, and most preferably less than about 0.2 cm. A dimension larger than 1 cm results in increased gas contamination of the products produced in the opposing side of the cell, because the gas finds less resistance in going through the membrane to the opposing side of the cell than it finds in escaping through the catalytically active particles. The width or diameter of the openings in the screen are greater than 6 $\mu$m (microns) and preferably greater than 20 $\mu$m (microns), thus forming islands on the membrane that can be as small as 6 $\mu$m (microns) and as large as 1 cm.

The shape of the islands of catalytically active particles is not limited and can assume any number of possible shapes, such as squares, rectangles, triangles and the like. It is believed that the improvements realized by this invention are caused by the increased ability of the produced gases to diffuse out of the porous electrode film and into the electrolyte solution, rather than diffusion through the membrane proper and into the electrolyte on the opposite side of the membrane. While there are many factors that determine the diffusion path of gas produced in the porous electrode, the open areas of the membrane of the present invention are arranged intimately with the catalytic areas in such a way as to provide lateral pathways for the produced gases to reach the electrolyte solution that are not achieved by the prior art. By lateral pathways is meant diffusion paths from the gas producing regions in the catalytically active islands to the electrolyte that extend essentially parallel to the membrane surface. Furthermore, as these open areas are not producing gaseous products, these areas are not providing a pressure and/or concentration gradient that would work against the desired transport of gaseous products out of the electrocatalytic regions of the M & E assembly and into the electrolyte solution.

Taking the above into consideration, the "dimension" of the islands of catalytically active material is limited only to the extent that this advantage is reduced to insignificant amounts. For example, the case of circularly-shaped islands which are regularly distributed over one face of the membrane will be considered. For each circle, the longest lateral diffusion pathway for produced gas can be approximated by the radius $r$ (from the center to the edge). The active area, that which produces gaseous product, is approximated by $r^2$. If one increases the radius $r$, the lateral diffusion path will increase linearly with $r$, and the active area will increase with $r^2$; both effects will tend to decrease the extent to which the lateral diffusion paths play a role in mass transport of the gaseous products. Consequently transport through the membrane proper will play an increasingly greater role, and the contamination of the opposing electrolyte with gaseous product will increase accordingly.

Experiments show that the extent of gaseous contamination is related more directly to the percentage of open area on the membrane rather than the radius of the islands. If this is true, then the limitations and preferred ranges of the percentage of open area are also quite important.

The M & E structure of the present invention includes embodiments where catalytically active particles and a substantially flat screen are bonded to or embedded in one or both sides of the membrane. However, the present invention requires that at least one of the electrodes be in the form of a plurality of catalyticaly active particles contacting the membrane. The electrode can serve, during cell operation, as either a cathode or an anode. Optionally, both electrodes can be catalytically active particles embedded into opposite sides or surfaces of the membrane. For the purposes of the present discussion, the forms of both electrodes will be described as though they are catalytically active particles and will also be described as if they are separate, conventional electrodes.

Conventional anodes are usually hydraulically permeable, electrically conductive structures made in a variety of shapes and styles including, for example, a screen of expanded metal, perforated plate, punched plate, unflattened diamond shaped expanded metal or woven metallic wire. Metals suitable for use as anodes include tantalum, tungsten, niobium, zirconium, molybdenum and, preferably, titanium and titanium alloys containing major amounts of these metals.

Optionally, the anode may be composed of a plurality of catalytically active particles embedded into the membrane. Materials suitable for use as electrocatalytically active anode materials include, for example, activating substances such as oxides of platinum group metals like ruthenium, iridium, rhodium, platinum, palladium, either alone or in combination with an oxide of a film-forming metal. Other suitable activating oxides include cobalt oxide either alone or in combination with other metal oxides. Examples of such activating oxides are found in U.S. Patent Nos. 3,632,498; 4,142,005; 4,061,549 and 4,214,971.

Conventional cathodes are usually hydraulically permeable, electrically conductive structures made in a variety of shapes and styles including, for example, a screen of expanded metal, perforated plate, punched plate, unflattened diamond shaped expanded metal or woven metallic wire. Metals suitable for use as cathode include, for example, copper, iron, nickel, lead, molybdenum, cobalt, alloys including major amounts of these metals, such as low carbon stainless steel, and metals or alloys coated with substances such as silver, gold, platinum, ruthenium, palladium and rhodium.

Optionally, the cathode may be a plurality of catalytically active particles embedded into the membrane. Materials suitable for use as electrocatalytically active cathode materials include, for example, a platinum group metal or metal oxide, such as ruthenium or ruthenium oxide. U.S. Patent No. 4,465,580 describes such cathodes.

The catalytically active particles, whether used as an anode or as a cathode are, preferably, finely divided and have a high surface area. For example, in the case of an oxygen or hydrogen electrode fuel cell, platinum black (having a surface area of greater than 25 $m^2$/gram) or high surface area platinum (800-1800 $m^2$/g) on activated carbon powder (average particle size 10 to 30 $\mu$m (microns) are quite suitable for use as the anode and the cathode. In the case of a chlorine cell, catalytically active particles may be prepared in which ruthenium dioxide particles are prepared by thermal decomposition of ruthenium nitrate for 2 hours at a temperature of 450°C. The resulting oxide may then be ground using a mortar and pestle and the portion which passed through a 325 mesh sieve (less than 44 $\mu$m (microns) used to prepare the electrode.

Membranes that are suitable for use in the present invention may be constructed of a fluorocarbon-type material or of a hydrocarbon-type material. Such membrane materials are well known in the art. Preferably, however, fluorocarbon materials are generally preferred because of their chemical stability.

Nonionic (thermoplastic) forms of perfluorinated polymers are particularly suitable for use in the present invention because they are easily softened by heating and make it easy to bond the membrane to the electrode and to the flat screen or screen template. Membranes which are suitable are described in the following U.S. Patent Nos.: 3,282,875; 3,909,378; 4,025,405; 4,065,366; 4,116,888; 4,123,336; 4,126,588; 4,151,052; 4,176,215; 4,178,218; 4,192,725; 4,209,635; 4,212,713; 4,251,333; 4,270,996; 4,329,435; 4,330,654; 4,337,137; 4,337,211; 4,340,680; 4,357,218; 4,358,412; 4,358,545; 4,417,969; 4,462,877; 4,470,889 and 4,478,695; and European Patent Publication 0,027,009. Membrane polymers usually have equivalent weight in the range of from 500 to 2000. The membranes can be a single layer or they can be a multilayer membrane. Some of the more useful membranes are bilayer membranes having sulfonic ion exchange groups in one layer and carboxylic ion exchange groups in the other layer.

To allow the catalytically active particles to be embedded into the fluorocarbon membrane, it is desirable for the fluorocarbon membrane to be in its thermoplastic form. It is in a thermoplastic form when it is made and before it is converted into an ion exchange form. By thermoplastic form, it is meant, for instance, that the membrane has $SO_2X$ pendant groups, where X is -F, $-CO_2$, $-CH_3$ or a quaternary amine, rather than ionically bonded $SO_3Na$ or $SO_3H$ pendant groups.

Particularly preferred fluorocarbon materials for use in forming membranes are copolymers of monomer I with monomer II (as defined below). Optionally, a third type of monomer may be copolymerized with I and II.

The first type of monomer is represented by the general formula:

$$CF_2 = CZZ' \qquad (I)$$

where:

Z and Z' are independently selected from -H, -Cl, -F, and $-CF_3$.

The second type of monomer consists of one or more monomers selected from compounds represented by the general formula:

$$Y-(CF_2)_a-(CFR_f)_b-(CFR_{f'})_c-O-[CF(CF_2X)-CF_2-O]_n-CF=CF_2 \qquad (II)$$

where:

Y is selected from $-SO_2Z$, -CN, -COZ and C-$(R^3f)(R^4f)OH$;

Z is selected from -I, -Br, -Cl, -F, -OR and $-NR1R^2$;

R is a branched or linear alkyl radical having from 1 to 10 carbon atoms or an aryl radical;

$R^3f$ and $R^4f$ are independently selected from perfluoroalkyl radicals having from 1 to about 10 carbon atoms;

$R_1$ and $R_2$ are independently selected from -H, a branched or linear alkyl radical having from 1 to 10 carbon atoms or an aryl radical;

a is 0-6;

b is 0-6;

c is 0 or 1;

provided a + b + c is not equal to 0;

X is selected from -Cl, -Br, -F or mixtures thereof when n>1;

n is 0 to 6; and

$R_f$ and $R_{f'}$ are independently selected from -F, -Cl, perfluoroalkyl radicals having from 1 to 10 carbon atoms and fluorochloroalkyl radicals having from 1 to 10 carbon atoms.

Particularly preferred is when Y is $-SO_2F$ or $-COOCH_3$; n is 0 or 1; $R_f$ and $R_{f'}$ are -F; X is -Cl or -F; and a + b + c is 2 or 3.

The third, and optional, monomer suitable is one or more monomers selected from the compounds represented by the general formula:

$$Y'-(CF_2)_{a'}-(CFR_f)_{b'}-(CFR_{f'})_{c'}-O-[CF(CF_2X')-CF_2-O]_{n'}-CF-=CF_2 \quad (III)$$

where:

Y' is selected from -F, -Cl and -Br;

a' and b' are independently 0-3;

c' is 0 or 1;

provided a' + b' + c' is not equal to 0;

n' is 0-6;

$R_f$ and $R_{f'}$ are independently selected from -Br, -Cl, -F, perfluoroalkyl radicals having from 1 to 10 carbon atoms, and chloroperfluoroalkyl radicals having from 1 to 10 carbon atoms; and

X' is selected from -F, -Cl, -Br and mixtures thereof when n'>1.

Conversion of Y to ion exchange groups is well known in the art and consists of reaction with an alkaline solution. The membrane may be converted to its ionic form by reacting it with, in the case of $-SO_2F$ pendant groups, 25 weight percent NaOH under the following conditions: (1) immerse the film in about 25 weight percent sodium hydroxide for about 16 hours at a temperature of about 90°C; (2) rinse the film twice in deionized water heated to about 90°C, using 30 to 60 minutes per rinse. The pendant group is then in the $-SO_3^-Na^+$ form. Cations other than $-Na^+$ can be made to replace the $Na^+$ if practical (such as $-H^+$).

Preparation of the supported M & E structure of the present invention involves a plurality of steps. First, a membrane and a flat screen are selected. The flat screen or screen template upon which the solution/dispersion is deposited optionally is cleaned or treated in such a way as to assure uniform contact with the solution/dispersion. The flat screen can be cleansed by washing with a degreaser or similar solvent followed by drying to remove any dust or oils from the flat screen. Metallic screens may be acid etched, then washed with a solvent to promote adhesion, if desired, unless the metal is new, in which case degreasing is sufficient. After being cleaned, the flat screen may be preconditioned by heating or vacuum drying prior to contact with the membrane.

There are a number of suitable ways for depositing the particles onto the membrane. For example, a slurry of the catalytically active particles in a solution or dispersion is painted or sprayed through the openings in the screen onto the membrane. Spraying the slurry onto the membrane through the screen is used to advantage for covering large or irregularly shaped openings in the screen. Pouring the slurry through the screen opening onto the membrane may also be used. Painting the slurry with a brush or roller has also been successfully employed. In addition, coatings may be easily applied with metering bars, knives, or rods. Usually, the coatings or films are built up to the thickness desired by repetitive application. A variety of printing techniques can also be used to apply the slurry to the membrane.

A particularly suitable method for depositing the catalytic particles onto the membrane involves forming a solution/dispersion of the catalytically active particles on a removable substrate by first forming a slurry of the catalytically active particles in a solvent/dispersant. Preferably, the solvent/dispersant used for suspending the catalytic particles is one which will at least partially dissolve the polymer making up the ion exchange membrane. This techniques provides for a better bonding of the particles to the membrane.

Optionally, and preferably, the solution/dispersion may contain a binder to help hold the catalytically active particles together. Preferred binders include a variety of fluoropolymers, including such materials as polytetrafluoroethylene, perfluorinated polymers and copolymers and ionomers. Particularly preferred as a binder is an ionomer having the same or a similar composition as the ion exchange membrane. Examples of the types of ionomers that are suitable for use as a binder are the same as those shown to be suitable for use as the ion exchange membrane, discussed above. The solvent/dispersant discussed above is a solvent for the ion exchange polymer. Thus, a slurry can be formed that contains catalytically active particles, an ion exchange fluoropolymer and a solvent/dispersant. This solution/dispersion helps bond the catalytically active particles together when deposited onto the membrane.

When a slurry is prepared, the concentration (in the dry form, not including the solvent/dispersant) of the ionomer is preferably from 4 to 20 weight percent. The concentration of the catalytically active particles is greater than 0.1 weight percent but typically does not exceed about 30 weight percent. There is no set maximum limit, however, since the catalytic activity depends upon the type of catalyst being used and since all catalysts perform slightly differently, experimentation with the particular catalyst being used will determine the optimum catalyst level. However, when the ruthenium oxide is used, levels of from 2 to 20 weight percent have been found to be suitable. All of the percentage weights are based on the total weight of the slurry.

Optionally, an electrically conductive metal can be added to the slurry to increase the electrical conductivity of the catalyst deposited on the membrane. Silver is commonly added, for example, at a level of from 60 to 90 weight percent. Other suitable metals include nickel, tantalum, platinum and gold.

The preparation of the slurry may be accomplished using the following procedures. Other techniques may suitably be used. First, the components are weighed and blended with each other in the dry state. Then, sufficient solvent/dispersant is added to cover the dry ingredients. The mixture is then blended in a ball mill for a time period of from 4 to 24 hours to obtain a uniform mixture. This also gives time for the ionomer to be broken up and at least partially dissolved. This aids in bonding the catalytically active particles together. Then, the mixture is allowed to settle and the excess solvent/dispersant is decanted off. At this point, the mixture usually contains 25 weight percent solids.

Solvents/dispersants suitable for use in the present invention should have the following characteristics:

a boiling point less than 110°C;

a density of from 1.55 to 2.97 gm/cm$^3$; and

a solubility parameter of from greater than 7.1 to 8.2 hildebrands.

It has been found that solvents/dispersants represented by the following general formula are particularly preferred provided they also meet the characteristics discussed above (boiling point, density and solubility parameter):

XCF$_2$-CYZ-X′

wherein:

X is selected from -F, -Cl, -Br and -I;

X′ is selected from -Cl, -Br and -I;

Y and Z are independently selected from -H, -F, -Cl, -Br, -I and -R′;

R′ is selected from perfluoroalkyl radicals and chloroperfluoroalkyl radicals having from 1 to 6 carbon atoms.

The most preferred solvents/dispersants are 1,2-dibromotetrafluoroethane (commonly known as Freon 114 B 2):

BrCF$_2$-CF$_2$Br

and 1,2,2-trichlorotrifluoroethane (commonly known as Freon 113):

ClF$_2$C-CCl$_2$F

Of these two solvents/dispersants, 1,2-dibromotetrafluoroethane is the most preferred solvent/dispersant. It has a boiling point of about 47.3°C, a density of about 2.156 gm/cm$^3$ and a solubility parameter of about 7.2 hildebrands.

1,2-dibromotetrafluoroethane is thought to work particularly well because, though not directly polar, it is highly polarizable. Thus, when 1,2-dibromotetrafluoroethane is associated with a polar molecule, its electron density shifts and causes it to behave as a polar molecule. Yet, when 1,2-dibromotetrafluoroethane is around a nonpolar molecule, it behaves as a nonpolar solvent/dispersant. Thus, 1,2-dibromotetrafluoroethane tends to dissolve the nonpolar backbone of polytetrafluoroethylene and also the polar pendant groups. The solubility parameter of 1,2-dibromotetrafluoroethane is calculated to be from 7.13 to 7.28 hildebrands.

The slurry is then coated onto a removable substrate, such as aluminum foil. A plurality of coats of the slurry may be applied to build up the desired thickness of the catalytically active particles. Between coatings, it is preferable to dry the slurry by removing the solvent/dispersant. This can be accomplished by allowing the solvent/dispersant to evaporate, by heating or by vacuum drying. The coating may be of any desired thickness. However, a thickness of from as 5 to 50 $\mu$m (microns) has been found to be suitable. Optionally, the coatings can be sintered between coatings and before the coatings are transferred to the membrane.

Then, the coated removable substrate is placed against one surface of the screen. The other surface of the screen is then placed against the membrane and the combination is subjected to pressure to push the catalytically active particles through the holes in the screen and onto the ion exchange membrane. Optionally, heat may be applied during the pressing cycle to enhance transfer of the catalytically active particles to the membrane and to enhance adhesion of the particles to the membrane. However, the combination should not be heated above temperatures of about 230°C (450°F) because the membrane will become sufficiently soft and will adhere to the screen. Likewise, pressures in excess of about 7 kg/cm$^2$ should be avoided because they will press the membrane through the holes in the screen. When pressure and heat are both used, the time of pressing should be relatively short, i.e. less than 30 seconds. The time is estimated to be the time necessary to bring the membrane up to the stated temperature. However, when no heat is used, the combination can be pressed for a period of up to about 5 minutes.

After the catalytically active particles have been transferred to the membrane, the pressure and/or heat are removed and the screen is peeled off the membrane, leaving a plurality of islands of catalytically active particles on the membrane.

It is then necessary to more permanently fix the islands of catalytically active particles to the membrane. This may be accomplished by subjecting the coated membrane to additional pressure and heat. The coated membrane (when it is in a thermoplastic form or in its sodium form) may, for example, be heated to temperatures as high as about 260°C for a period of from 30 seconds to 1 minute to cause the components to bond together. When the membrane is in its hydrogen form, it should not be heated above a temperature greater than about 180°C because the membrane tends to decompose. These temperatures soften the binder in the slurry and soften the membrane, allowing the two to bond to each other. Too low a temperature or too short a time of heating results in the catalytically active particles not being completely bonded to the membrane. Too long a time results in too much blending of the particles with the membrane. Too high a temperature causes the membrane to melt which prevents the proper M & E structure from being formed.

It is sometimes beneficial to heat the combination under pressures of up to about 3.5 kg/cm$^2$ to ensure good bonding of the components. However, pressures of greater than 3.5 kg/cm$^2$ tend to flatten the combination too much.

Preferably, a heated press is used to bond the components. Although a variety of procedures may be used, one that has been found to be particularly useful involves forming a sandwich of the components between two platens, an upper platen and a lower platen. On top of the lower platen is a screen of polytetrafluoroethylene paper, the membrane having the catalytically active particles coated thereon, another screen of polytetrafluoroethylene paper, a rubber screen to provide resilience, another screen of polytetrafluoroethylene paper, and finally, the upper platen. This sandwich is then placed in a heated press and heated to under pressure to effect the bonding.

The fact that the first face of the screen is substantially flat minimizes the penetration of the catalytically active particles into the space between the solid portions of the screen and the membrane. In other words, the catalytically active solution/dispersion does not "run" when it is applied to the membrane. Even the screen shown in Figure 2 is sufficiently flat to minimize "running" of the catalytically active solution/dispersion.

Optionally, the catalytic particles are coated onto an electrically conductive screen/membrane combination, which is then heated to bond the combination together. When the membrane is in a thermoplastic form or in a sodium form, the following conditions may be used for bonding. It may be heated to about 260°C for a time period of from 30 seconds to 1 minute. The time is estimated to be the time necessary to bring the membrane up to the stated temperature. Too low a temperature or too short a time of heating results in the electrically conductive screen not being completely bonded to the membrane. Too long a time results in the metal passing entirely through the membrane and not being located on its surface. Too high a temperature causes the membrane to melt which prevents the proper M & E from being formed. It is sometimes beneficial to heat the electrically conductive screen/membrane combination under pressures of up to about 3.5 kg/cm$^2$. Pressures greater than about 3.5 kg/cm$^2$ tend to push the membrane completely through the electrically conductive screen. When, however, the membrane is in a hydrogen form, it should not be heated above about 180°C.

Since the catalytic coating covers only a portion of the membrane, less catalytically active material is used. However, the catalytic activity of the M & E structure is at least equivalent to the M & E's of the prior art.

It has been discovered that, even though the present invention uses only a portion of the catalytically active particles, the concentration of particles can be reduced even further. For example, a typical solution/dispersion of catalytically active particles contains about 75 weight percent silver, about 16 weight percent ruthenium oxide and about 9 weight percent ionomer. However, using the techniques of the present invention, a slurry containing about 83 weight percent silver, about 8 weight percent ruthenium oxide and about 9 weight percent ionomer performs substantially as well as the one having 16 weight percent ruthenium oxide. This represents a potential savings of approximately one-half of the more expensive ruthenium oxide catalyst.

The methods and techniques in which the membranes of the present invention, having a plurality of islands of catalytically active particles bonded to at least one surface of the membrane, are used is well known in the art. Generally, however, a current collector is pressed against the islands of catalytically active particles and is connected with a power supply (in the case of an electrolytic cell) or with a power consuming device (in the case of fuel cells or batteries). The current collector conducts electrical energy to (or from) the islands of catalytically active particles. It has been found that a particularly suitable current collector is an electrically conductive screen having a pattern identical to the screen used to form the islands of catalytically active particles. This will assure that each island of catalytically active particles can transfer electrical energy to (or from) the current collector. Optionally, a resilient device, such as a mattress, may be used to hold the current collector against the coated membrane.

The M & E structure of the present invention is useful in a wide variety of electrochemical cells including, for example, fuel cells for the continuous production of electrical energy, electrolysis cells for the production of chemical products (such as chlorine and caustic from a sodium chloride brine solution or hydrogen and oxygen from water) and batteries for the intermitten production of electrical energy.

Example 1

A mixture of about 76 grams of silver particles, about 16 grams of ruthenium oxide particles and about 8 grams of carboxylic ion exchange fluoropolymer particles were dissolved and suspended in $BrCF_2$-$CF_2Br$ in a ball mill. First the dry components were weighed and blended with each other. Then sufficient solvent/dispersant was added to cover the ingredients. The mixture was then blended in a ball mill for a time period of about 24 hours to obtain a uniform mixture. This also gave time for the ionomer to be broken up and at least partially dissolved. Then, the mixture was allowed to settle and the excess solvent/dispersant was decanted off. At this point, the mixture contained about 25 weight percent solids.

The mixture was applied to a sheet of aluminum foil by spraying with an airless spray gun to a thickness of 20 to 30 $\mu$m (microns). The solution/dispersion was allowed to air dry. The coating was then placed in an oven and heated to a temperature of from 250°C to 260°C for approximately 10 minutes to sinter the coating.

A bilayer fluoropolymer ion exchange membrane having a carboxylic layer approximately 0.01 mm thick and having a sulfonic layer approximately 0.9 mm thick was placed on a sheet of polytetrafluoroethylene with the sulfonic layer contacting the polytetrafluoroethylene sheet.

An electroformed screen template from Perforated Products, Inc., having an area of approximately 56 $cm^2$ was placed onto the carboxylic layer of the membrane. The screen template had a plurality of openings having a diameter of 0.7 mm evenly distributed over its surface. There were a sufficient number of openings to provide the screen with an open area of 50 percent. The screen had a thickness of about 0.07 mm.

The aluminum foil having the sintered coating on it was placed onto the screen template with the coating contacting the screen. Then, a sheet of polytetra-fluoroethylene was placed on top of the aluminum foil.

The combination was placed in a heated, hydraulic press at a pressure of about 3.5 kg/$cm^2$ and at a temperature of about 170°C for a time of from 30 to 60 seconds. The pressure pushed portions of the coating through the holes in the screen onto the membrane, forming a plurality of islands of catalytically active particles on the membrane. The heat and pressure caused the islands of catalytically active particles to bond to the membrane.

The combination was then removed from the press and the polytetrafluoroethylene sheets were removed. Then the screen template was removed, leaving a membrane having a plurality of islands of catalytically active material on the membrane.

Example 2

A mixture of about 76 grams of silver particles, about 16 grams of ruthenium oxide particles and about 8 grams of carboxylic ion exchange fluoropolymer particles were dissolved and suspended in $BrCF_2$-$CF_2Br$ in a ball mill. First, the dry components were weighed and blended with each other. Then, sufficient solvent/dispersant was added to cover the ingredients. The mixture was then blended in a ball mill for a time period of about 24 hours to obtain a uniform mixture. This also gave time for the ionomer to be broken up and to be at least partially dissolved. Then, the mixture was allowed to settle and the excess solvent/dispersant was decanted off. At this point, the mixture contained about 25 weight percent solids.

The solution/dispersion was applied to a sheet of aluminum foil by spraying with an airless spray gun to a thickness of from 20 to 30 $\mu$m (microns). The solution dispersion was allowed to air dry to form a coating. The coating was then placed in an oven and heated to a temperature of from 250° to 260°C for approximately 10 minutes to sinter the coating.

A bilayer fluoropolymer ion exchange membrane having a carboxylic layer approximately 0.01 mm (0.5 mil) thick and having a sulfonic layer approximately 0.09 mm (3.5 mils) thick was placed on a sheet of polytetrafluoroethylene with the sulfonic layer contacting the polytetrafluoroethylene sheet.

An electroformed screen template from Perforated Products, Inc., having an area of approximately 56 cm$^2$ was placed onto the carboxylic layer of the membrane. The screen had a plurality of openings having a diameter of about 0.7 mm evenly distributed over its surface. There were a sufficient number of openings to provide a screen having an open area of approximately 50 percent. The screen had a thickness of about 0.1 mm.

The aluminum sheet having the sintered coating on it was then placed onto the screen with the coating contacting the screen. A sheet of rubber was placed on top of the aluminum foil and a sheet of polytetrafluoroethylene was placed on top of the rubber sheet.

The combination was placed in an unheated, hydraulic press at a pressure of about 7 kg/cm$^2$ at room temperature for about 5 minutes. The pressure pushed portions of the coating through the holes in the screen onto the membrane, forming a plurality of islands of catalytically active particles on the membrane.

The combination was then removed from the press, and the polytetrafluoroethylene sheets, the rubber sheet and the screen were removed. The membrane was then placed between two polytetrafluoroethylene sheets and placed in a heated press. The combination was pressed at a temperature of about 230°C at a pressure of about 3.5 kg/cm$^2$ for a period of from 30 to 60 seconds to bond the islands of catalyst to the membrane.

Example 3

A mixture was prepared and spread onto a sheet of aluminum foil in a layer approximately 20 to 50 $\mu$m (microns) thick, in accordance with the procedure in Example 1. The coating was allowed to air dry and then sintered for about 5 minutes at a temperature of about 260°C.

A bilayer ion exchange membrane having a fluoropolymer containing sulfonic ion exchange groups in one layer and a fluoropolymer containing carboxylic ion exchange groups in the other layer was obtained. The thickness of the membrane was approximately 0.1 mm. The carboxylic layer was about 0.012 mm thick and the sulfonic layer was about 0.09 mm thick . A nickel screen (as in Example 1) was contacted with the side of the membrane containing the carboxylic ion exchange groups. The other side of the screen was contacted with the catalytically active coating formed on the aluminum foil. The combination was pressed together at a pressure of about 3.5 kg/cm$^2$ at a temperature of about 260°C for about 30 seconds. The pressure pushed the coating on the aluminum foil through the holes in the screen and onto the membrane. The heat caused the catalytically particles to bond to the membrane. The combination was then removed from the press, allowed to cool and the coated aluminum foil was removed. This left a membrane having the screen bonded to the membrane. In the open areas of the screen, the catalytically active particles which had been pressed through the holes in the screen had been deposited onto the membrane.

**Claims**

1. A composite membrane/electrode structure comprising: a substantially planar ion exchange membrane having a plurality of islands of catalytically active particles bonded to at least one planar surface of the membrane, wherein said islands are regularly distributed over the surface and have a diameter or width of from 6 $\mu$m (microns) to 1 cm and wherein up to about 75 percent of said membrane surface is covered with said catalytically active particles.

2. The structure of Claim 1, wherein said islands cover from 25 to 60 percent of said membrane surface and the diameter or width of said islands is from 20 $\mu$m (microns) to 0.5 cm.

3. The structure of Claim 1, wherein the membrane is selected from a fluorocarbon-type or hydrocarbon-type material.

4. The structure of Claim 1, 2 or 3, wherein a binder is distributed among the catalytically active particles to bond them together, said binder comprising a polymer of the same composition which forms at least a part of the membrane.

5. The structure of Claim 1, wherein an electrically conductive metal is distributed among the catalytically active particles.

6. The structure of Claim 5, wherein the electrically conductive particles are selected from silver, nickel, tantalum, platinum and gold, and mixtures thereof.

7. The structure of Claim 1, wherein the islands have a thickness of less than 20 $\mu$m (microns).

8. The structure of any one of the preceding claims, including a substantially planar electrically conductive screen having a plurality of openings passing therethrough, said openings occupying up to 75 percent of the surface area of the screen, said ion exchange membrane being bonded to the screen thereby leaving portions of the membrane surface exposed through the openings in the screen, and said plurality of catalytically active particles being disposed on the exposed surface portions of the membrane and in electrical and physical contact with the membrane and the screen.

9. The structure of Claim 8, wherein the electrically conductive screen is an electroformed metallic screen having from 25 to 60 percent open area.

10. The structure of Claim 8 or 9, wherein the screen is nonporous around its peripheral edges and wherein the thickness of the screen does not exceed the thickness of a layer of the membrane to which the screen is attached by more than about 25 percent.

11. A method for making an improved composite membrane/electrode structure comprising the steps of:

(a) forming a coating of catalytically active particles on a removable substrate;

(b) contacting a substantially planar ion exchange membrane with a substantially flat and planar screen having a plurality of regularly distributed openings passing therethrough, said openings occupying up to 75 percent of the surface area of the screen;

(c) contacting the screen with the coated substrate;

(d) pressing the substrate against the screen with sufficient pressure to push the catalytically active particles through the openings in the screen and onto the membrane, thereby forming a plurality of regularly distributed islands of catalytically active particles on the surface of the membrane;

(e) removing the screen; and

(f) bonding the catalytically active particles to the membrane.

12. A method for making a composite membrane/electrode structure comprising the steps of:

(a) contacting at least one surface of a substantially planar ion exchange membrane with a substantially flat electrically conductive screen having a plurality of regularly distributed openings occupying up to 75 percent of the surface area of the screen, thereby leaving a portion of the membrane exposed through the openings in the screen;

(b) coating the portion of the membrane exposed through the openings in the screen with catalytically active particles; and

(c) bonding the membrane to the particles and the screen.

13. The method of Claim 11 or 12, wherein the openings in the screen occupy from 40 to 60 percent of the surface area of the screen.

14. The method of Claim 12, wherein the screen/membrane combination is heated to a temperature of up to 175°C (350°F).

15. The method of Claim 14, wherein the screen/membrane combination is subjected to a pressure of up to 7 kg/cm$^2$.

16. The method of Claim 11 or 12, wherein the catalytically active particles are bonded to the membrane by heating the particle coated membrane to a temperature of up to about 260°C, and pressing the coated membrane at a pressure of up to 7 kg/cm$^2$.

17. The method of Claim 11 or 12, wherein the catalytically active particles are blended with a solvent/dispersant and are in the form of a solution/dispersion when coated onto the membrane, wherein the solvent/dispersant is represented by the general formula:

$$XCF_2-CYZ-X'$$

wherein:

X is selected from -F, -Cl, -Br and -I;

X' is selected from -Cl, -Br and -I;

Y and Z are independently selected from -H, -F, -Cl, -Br, -I and -R';

R' is selected from perfluoroalkyl radicals and chloroperfluoroalkyl radicals having from 1 to 6 carbon atoms.

18. The method of Claim 17, wherein the solvent/dispersant is selected from 1,2-dibromotetrafluoroethane and 1,2,2-trichlorotrifluoroethane.

19. The method of Claim 17 or 18, wherein the solution/dispersion contains from 4 to 20 weight percent of an ionomer.

20. The method of Claim 17, 18 or 19, wherein the solution/dispersion contains from 0.1 to 25 weight percent catalytically active particles.

21. The method of any one of Claims 17 to 20, wherein the solution/dispersion contains from 60 to 90 weight percent of an electrically conductive metal.

**22.** The method of any one of Claims 17 to 21, wherein the solution/dispersion contains about 25 weight percent solids.

**23.** The method of Claim 11, wherein the substrate is coated to a thickness of from 5 to 50 $\mu$m (microns).

**Patentansprüche**

**1.** Zusammengesetzte Membran/Elektroden-Struktur, umfassend: eine im wesentlichen planare Ionenaustauschermembran mit einer Vielzahl von Inseln katalytisch aktiver Teilchen, die an mindestens eine planare Oberfläche der Membran gebunden sind, wobei die Inseln regelmäßig über die Oberfläche verteilt sind und einen Durchmesser oder eine Breite von 6 Mikrometer (Mikron) bis 1 cm aufweisen und worin bis zu etwa 75 % der Membranoberfläche mit den katalytisch aktiven Teilchen bedeckt sind.

**2.** Struktur nach Anspruch 1, worin die Inseln von 25 bis 60 % der Membranoberfläche bedecken und der Durchmesser oder die Breite der Inseln von 20 Mikrometer (Mikron) bis 0,5 cm ist.

**3.** Struktur nach Anspruch 1, worin die Membran aus einem Material vom Fluorkohlenwasserstoff-Typ oder Kohlenwasserstoff-Typ ausgewählt ist.

**4.** Struktur nach Anspruch 1, 2 oder 3, worin ein Bindemittel unter den katalytisch aktiven Teilchen verteilt ist, um sie aneinander zu binden, wobei das Bindemittel ein Polymer der gleichen Zusammensetzung enthält, die mindestens einen Teil der Membran bildet.

**5.** Struktur nach Anspruch 1, worin ein elektrisch leitfähiges Metall unter den katalytisch aktiven Teilchen verteilt ist.

**6.** Struktur nach Anspruch 5, worin die elektrisch leitfähigen Teilchen aus Silber, Nickel, Tantal, Platin und Gold und Gemischen davon ausgewählt sind.

**7.** Struktur nach Anspruch 1, worin die Inseln eine Dicke von weniger als 20 Mikrometer (Mikron) aufweisen.

**8.** Struktur nach einem der vorhergehenden Ansprüche, umfassend ein im wesentlichen planares, elektrisch leitfähiges Sieb mit einer Vielzahl von dort hindurchgehenden Öffnungen, wobei die Öffnungen bis zu 75 % der Oberfläche des Siebs einnehmen, wobei die Ionenaustauschermembran an das Sieb gebunden ist, wodurch Teile der Membranoberfläche durch die Öffnungen im Sieb exponiert bleiben und eine Vielzahl katalytisch aktiver Teilchen an den exponierten Oberflächenteilen der Membran und in elektrischem und physikalischem Kontakt mit der Membran und dem Sieb angeordnet sind.

**9.** Struktur nach Anspruch 8, worin das elektrisch leitfähige Sieb ein galvanisch hergestelltes Metallsieb mit 25 bis 60 % offenem Bereich ist.

**10.** Struktur nach Anspruch 8 oder 9, worin das Sieb um seine Umfangsränder nicht porös ist und worin die Dicke des Siebs die Dicke einer Schicht der Membran, an die das Sieb gebunden wird, um nicht mehr als etwa 25 % übersteigt.

**11.** Verfahren zur Herstellung einer verbesserten zusammengesetzten Membran/Elektroden-Struktur, umfassend die Schritte:

(a) Herstellen einer Beschichtung von katalytisch aktiven Teilchen auf einem entfernbaren Substrat;

(b) Kontaktieren einer im wesentlichen planaren Ionenaustauschermembran mit einem im wesentlichen flachen und planaren Sieb, das eine Vielzahl von gleichmäßig verteilten, dort hindurchgehenden Öffnungen aufweist, wobei die Öffnungen bis zu 75 % der Oberfläche des Siebes einnehmen;

(c) Kontaktieren des Siebes mit dem beschichteten Substrat;

(d) Pressen des Substrats gegen das Sieb mit ausreichendem Druck, um die katalytisch aktiven Teilchen durch die Öffnungen im Sieb und auf die Membran zu drücken, wodurch eine Vielzahl von gleichmäßig verteilten Inseln katalytisch aktiver Teilchen auf der Oberfläche der Membran erzeugt wird;

(e) Entfernen des Siebes und

(f) Binden der katalytisch aktiven Teilchen an die Membran.

**12.** Verfahren zur Herstellung einer zusammengesetzten Membran/Elektroden-Struktur, umfassend die Schritte:

(a) Kontaktieren von mindestens einer Oberfläche einer im wesentlichen planaren Ionenaustauschermembran mit einem im wesentlichen flachen, elektrisch leitfähigen Sieb, das eine Vielzahl von gleichmäßig verteilten Öffnungen aufweist, die bis zu 75 % der Oberfläche des Siebes einnehmen, wodurch ein Teil der Membran durch die Öffnungen im Sieb exponiert bleibt;

(b) Beschichten des durch die Öffnungen im Sieb exponierten Teils der Membran mit katalytisch aktiven Teilchen und

(c) Binden der Membran an die Teilchen und das Sieb.

13. Verfahren nach Anspruch 11 oder 12, worin die Öffnungen im Sieb von 40 bis 60 % der Oberfläche des Siebes einnehmen.

14. Verfahren nach Anspruch 12, worin die Sieb/Membran-Kombination auf eine Temperatur von bis zu 175°C (350°F) erhitzt wird.

15. Verfahren nach Anspruch 14, worin die Sieb/Membran-Kombination einem Druck von bis zu 7 kg/cm$^2$ ausgesetzt wird.

16. Verfahren nach Anspruch 11 oder 12, worin die katalytisch aktiven Teilchen durch Erhitzen der mit Teilchen beschichteten Membran auf eine Temperatur von bis zu etwa 260°C und Pressen der beschichteten Membran bei einem Druck bis zu 7 kg/cm$^2$ an die Membran gebunden werden.

17. Verfahren nach Anspruch 11 oder 12, worin die katalytisch aktiven Teilchen mit einem Lösungs-/Dispersionsmittel vermischt werden und in Form einer Lösung/Dispersion sind, wenn sie auf die Membran aufgetragen werden, worin das Lösungs-/Dispersionsmittel durch die allgemeine Formel dargestellt ist:

XCF$_2$-CYZ-X'

worin:

X aus -F, -Cl, -Br und -I ausgewählt ist;
X' aus -Cl, -Br und -I ausgewählt ist;
Y und Z unabhängig aus -H, -F, -Cl, -Br, -I und -R' ausgewählt sind;
R' aus Perfluoralkylresten und Chlorperfluoralkylresten mit 1 bis 6 Kohlenstoffatomen ausgewählt ist.

18. Verfahren nach Anspruch 17, worin das Lösungs-/Dispersionsmittel aus 1,2-Dibromtetrafluorethan und 1,2,2-Trichlortrifluroethan ausgewählt wird.

19. Verfahren nach Anspruch 17 oder 18, worin die Lösung/Dispersion von 4 bis 20 Gew.-% eines Ionomers enthält.

20. Verfahren nach Anspruch 17, 18 oder 19, worin die Lösung/Dispersion von 0,1 bis 25 Gew.-% katalytisch aktive Teilchen enthält.

21. Verfahren nach einem der Ansprüche 17 bis 20, worin die Lösung/Dispersion von 60 bis 90 Gew.-% eines elektrisch leitfähigen Metalls enthält.

22. Verfahren nach einem der Ansprüche 17 bis 21, worin die Lösung/Dispersion etwa 25 Gew.-% Feststoffe enthält.

23. Verfahren nach Anspruch 11, worin das Substrat bis zu einer Dicke von 5 bis 50 Mikrometer (Mikron) aufgetragen wird.

**Revendications**

1. Structure composite membrane/électrode comprenant: une membrane échangeuse d'ions quasiment plane comportant un ensemble d'îlots de particules catalytiquement actives lié à au moins une surface plane de la membrane, dans laquelle les îlots sont régulièrement répartis sur la surface et ont un diamètre ou largeur compris entre 6 $\mu$m (microns) et 1 cm et dans laquelle jusqu'à environ 75 pour-cent de ladite surface de membrane est couverte avec lesdites particules catalytiquement actives.

2. Structure selon la revendication 1, dans laquelle lesdits îlots recouvrent de 25 à 60 pour-cent de ladite surface de membrane et le diamètre ou largeur desdits îlots s'étend de 20 $\mu$m (microns) à 0,5cm.

3. Structure selon la revendication 1, dans laquelle la membrane est choisie à partir d'un matériau du type fluorocarbure ou du type hydrocarbure.

4. Structure selon la revendication 1, 2, ou 3, dans laquelle un liant est réparti parmi les particules catalytiquement actives pour les lier ensemble, ledit liant comprenant un polymère de la même composition que celui qui forme au moins une partie de la membrane.

5. Structure selon la revendication 1, dans laquelle un métal conducteur de l'électricité est réparti parmi les particules catalytiquement actives.

6. Structure selon la revendication 5, dans laquelle les particules conductrices de l'électricité sont choisies parmi l'argent, le nickel, le tantale, le platine et l'or, et leurs mélanges.

**7.** Structure selon la revendication 1, dans laquelle les îlots ont une épaisseur inférieure à 20 μm (microns).

**8.** Structure selon l'une quelconque des revendications précédentes, comprenant une grille conductrice de l'électricité pratiquement plane comportant un ensemble d'ouvertures la traversant, lesdites ouvertures occupant jusqu'à 75 pour-cent de la surface de la grille, ladite membrane échangeuse d'ions étant liée à la grille laissant, par ce moyen, des parties de la surface de la membrane exposées à travers les ouvertures dans la grille, et ledit ensemble de particules catalytiquement actives étant disposé sur les parties de surface exposées de la membrane et en contact électrique et physique avec la membrane et la grille.

**9.** Structure selon la revendication 8, dans laquelle la grille conductrice de l'électricité est une grille métallique électroformée ayant de 25 à 60 pour-cent de zone ouverte.

**10.** Structure selon la revendication 8 ou 9, dans laquelle la grille est non poreuse autour de ses bords périphériques et dans laquelle l'épaisseur de la grille ne dépasse pas l'épaisseur d'une couche de la membrane à laquelle la grille est attachée de plus d'environ 25 pourcent.

**11.** Procédé de fabrication d'une structure composite membrane/électrode améliorée comprenant les étapes consistant à :
   (a) former un revêtement de particules catalytiquement actives sur un substrat amovible;
   (b) mettre en contact une membrane échangeuse d'ions quasiment plane avec une grille pratiquement plate et plane comportant un ensemble d'ouvertures régulièrement réparti la traversant, lesdites ouvertures occupant jusqu'à 75 pour-cent de la surface de la grille;
   (c) mettre en contact la grille avec le substrat revêtu;
   (d) presser le substrat contre la grille avec une pression suffisante pour pousser les particules catalytiquement actives à travers les ouvertures dans la grille et sur la membrane, formant par là un ensemble d'îlots régulièrement répartis de particules catalytiquement actives sur la surface de la membrane,
   (e) éliminer la grille; et

   (f) lier les particules catalytiquement actives à la membrane.

**12.** Procédé de fabrication d'une structure composite membrane/électrode comprenant les étapes consistant à :
   (a) mettre en contact au moins une surface d'une membrane échangeuse d'ions quasiment plane avec une grille conductrice de l'électricité quasiment plate comportant un ensemble d'ouvertures régulièrement réparti occupant jusqu'à 75 pour-cent de la surface de la grille, laissant, par ce moyen, une partie de la membrane exposée à travers les ouvertures dans la grille;
   (b) revêtir la partie de la membrane exposée à travers les ouvertures dans la grille avec des particules catalytiquement actives; et
   (c) lier la membrane aux particules et à la grille.

**13.** Procédé selon la revendication 11 ou 12, dans lequel les ouvertures dans la grille occupent de 40 à 60 pour-cent de la surface de la grille.

**14.** Procédé selon la revendication 12, dans lequel la combinaison grille/membrane est chauffée à une température allant jusqu'à 175°C (350°F).

**15.** Procédé selon la revendication 14, dans lequel la combinaison grille/membrane est soumise à une pression allant jusqu'à 7 kg/cm2.

**16.** Procédé selon la revendication 11 ou 12, dans lequel les particules catalytiquement actives sont liées à la membrane en chauffant la membrane revêtue de particules à une température allant jusqu'à 260°C, et en pressant la membrane revêtue à une pression allant jusqu'à 7 kg/cm2.

**17.** Procédé selon la revendication 11 ou 12, dans lequel les particules catalytiquement actives sont mélangées avec un solvant/dispersant et sont sous la forme d'une solution/dispersion quand elles sont déposées sur la membrane, dans lequel le solvant/dispersant est représenté par la formule générale:

$XCF_2\text{-}CYZ\text{-}X'$

dans laquelle:
X est choisi parmi les atomes F, Cl, Br et I;
X' est choisi parmi les atomes Cl, Br et I;
Y et Z sont choisis indépendamment parmi les atomes H, F, Cl, Br, I et un radical R';
R' est choisi parmi les radicaux perfluoroalkyle et les radicaux chloroperfluoroalkyle ayant de 1 à 6 atomes de carbone.

18. Procédé selon la revendication 17, dans lequel le solvant/dispersant est choisi parmi le 1,2 dibromotétrafluoroéthane et le 1,2,2-trichlorotrifluoroéthane.

19. Procédé selon la revendication 17 ou 18, dans lequel la solution/dispersion contient de 4 à 20 pour-cent en poids d'un ionomère.

20. Procédé selon la revendication 17, 18, ou 19, dans lequel la solution/dispersion contient de 0,1 à 25 pour-cent en poids de particules catalytiquement actives.

21. Procédé selon l'une quelconque des revendications 17 à 20, dans lequel la solution/dispersion contient de 60 à 90 pour-cent en poids d'un métal conducteur de l'électricité.

22. Procédé selon l'une quelconque des revendications 17 à 21, dans lequel la solution/dispersion contient environ 25 pour-cent en poids de solides.

23. Procédé selon la revendication 11, dans lequel le substrat est revêtu d'une épaisseur allant de 5 à 50 $\mu$m (microns).

FIG.1

FIG.2

FIG.3